## Europäisches Patentamt

## European Patent Office

## Office européen des brevets

(19)

(11) Veröffentlichungsnummer: **0 001 385**
**B1**

(12) **EUROPÄISCHE PATENTSCHRIFT**

(45) Veröffentlichungstag der Patentschrift: **02.09.81**

(21) Anmeldenummer: **78100546.7**

(22) Anmeldetag: **28.07.78**

(51) Int. Cl.³: **F 16 L 21/02**

(54) Dichtungsring für eine Rohrsteckverbindung.

(30) Priorität: **26.09.77 DE 2743238**
**09.12.77 DE 2754982**

(43) Veröffentlichungstag der Anmeldung:
**18.04.79 Patentblatt 79/8**

(45) Bekanntmachung des Hinweises auf die Patenterteilung:
**02.09.81 Patentblatt 81/35**

(84) Benannte Vertragsstaaten:
**BE DE FR GB NL**

(56) Entgegenhaltungen:
**DE - A - 2 518 001**
**DE - A - 2 654 059**
**DE - B - 1 182 913**
**FR - A - 2 293 858**

(73) Patentinhaber: **WOCO Franz-Josef Wolf & Co.**
**Sprudelallee 19**
**D-6483 Bad Soden-Salmünster (DE)**

(72) Erfinder: **Wolf, Franz-Josef**
**Sprudelallee 19**
**D-6483 Bad Soden-Salmünster (DE)**
Erfinder: **Roth, Dieter**
**Zum wilden Stein 2**
**D-6490 Schlüchtern-Kressenbach (DE)**

(74) Vertreter: **Jaeger, Klaus, Dr.rer.nat. Dipl.-Chem. et al,**
**Jaeger, Grams & Pontani Patentanwälte**
**Bergstrasse 48 1/2**
**D-8035 München-Gauting (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Beschreibung

Die Erfindung betrifft einen Dichtungsring für eine Rohrstockverbindung zwischen einem äußeren Rohrelement, das im folgenden kurz als "Muffe" bezeichnet ist, und einem inneren Rohrelement, das im folgenden kurz als "Spitzende" bezeichnet ist, wobei der zur Vormontage in der Muffe bestimmte und aus einem elastischen Werkstoff bestehende Dichtungsring aus einem Lippenring und einem unmittelbar, jedoch beweglich, oder über einen ringförmigen Zwischensteg an diesem angeformten Haltering besteht, wobei der Haltering in der Muffe fixiert ist, und wobei der Lippenring eine innere Innendrucklippe und eine äußere Innendrucklippe trägt, von denen die innere Innendrucklippe im vormontierten Zustand des Dichtungsringes im wesentlichen nach radial einwärts steht und die andere Innendrucklippe, nämlich die äßere Innendrucklippe, mit Abstand von der Innenwand der Muffe im wesentlichen axial einwärts steht, und wobei der Lippenring derart am Haltering angelenkt ist, daß beim Einschieben des gegen die innere Innendrucklippe stoßenden Spitzendes eine Verformung des Lippenringes in der Weise erfolgt, daß die innere Innendrucklippe an der Außenwand des Spitzendes axial einwärts gerichtet und die äußere Innendrucklippe an der Innenwand der Muffe axial einwärts gerichtet zur Anlage kommt.

Bei bestimmungsgemäßer Vormontage des Dichtungsringes in der Muffe ist der Halterung in der Muffe festgelegt, beispielsweise in einer Ringnut, die in der Innenwand der Muffe ausgebildet ist, oder durch andere Mittel zum Fixieren des Halteringes. Durch eine solche Fixierung des Halteringes in der Muffe ist der gesamte Dichtungsring sowohl gegen eine axiale Verschiebung beim Einschieben des Spitzendes als auch gegen ein unbefugtes oder unbeabsichtigtes Entfernen aus der Muffe festgehalten. Die Fixierung des Halteringes kann in an sich bekannter Weise beispielsweise durch Kleben, Klemmen oder Verspannen erfolgen. Trotz dieser Fixierung des Dichtungsringes über den Haltering behält der Lippenring seine funktionsnotwendige Beweglichkeit bei.

"Axial einwärts" bezeichnet dabei im Rahmen der Erfindung gleichsinnig mit der Einschubrichtung des Spitzendes die Richtung vom Außenrand der Muffenöffnung, dem sogenannten Muffenkragen, zum Grund der Muffe, dem sogenannten Muffenspiegel. Entsprechend ist mit "axial auswärts" die entgegengesetzte Richtung vom Muffenspiegel zum Muffenkragen, also die Richtung entgegen der Einschubrichtung des Spitzendes, bezeichnet.

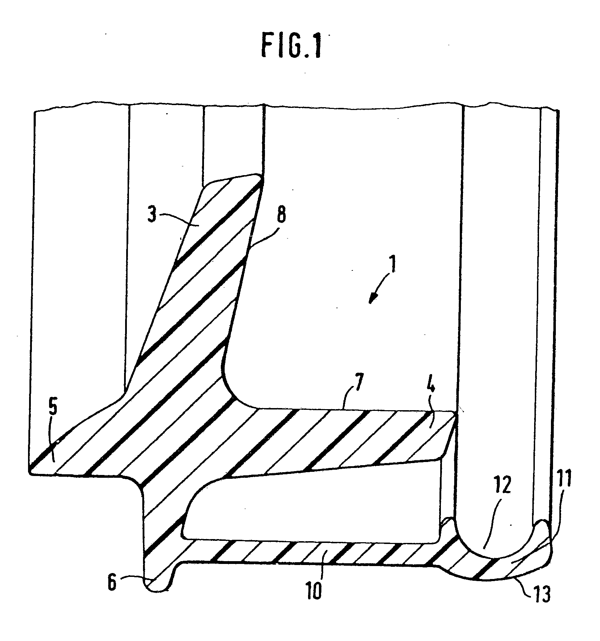

Ein Dichtungsring der eingangs genannten Art ist aus der Druckschrift DE - A - 25 45 830, dort insbesondere Figuren 1 und 2, bekannt. Der Lippenring dieses bekannten Dichtungsringes trägt zwei Dichtlippen, die bei eingeschobenem Spitzende beide nach axial einwärts gerichtet sind, also beide gegen Innendruck dichten. Nachteilig bei diesem Dichtungsring ist, daß er nicht ausreichend dicht gegen Außendruck ist. Beispielsweise ist bei Erdverlegung von Rohrleitungen mit solchen Dichtungen nicht ausreichend gewährleistet, daß Grundwasser durch die Dichtung zwischen der Außenwand des Spitzendes und der Dichtlippe des Ringes hindurch nicht in das Innere des Rohrsystems eindringt. Nachteilig ist weiterhin, daß trotz sorgfältiger Formgebung der Lippen und/oder einer zur Aufnahme zumindest einer Lippe dienenden Ringnut, die im Inneren der Muffenwand ausgebildet sein kann, nicht immer ein Umschlagen der äußeren Innendrucklippe in der erwünschten Richtung, nämlich nach axial einwärts, gewährleistet ist.

Angesichts dieses Standes der Technik liegt der Erfindung die Aufgabe zugrunde, einen Dichtungsring der eingangs genannten Art zu schaffen, der sowohl gegen Innendruck als auch gegen Außendruck zuverlässig dicht ist und bei Vormontage in der Muffe trotz Beibehaltung eines funktionsnotwendigen hohen Maßes an Beweglichkeit für den Lippenring axial zuverlässig fixierbar ist, und dessen Dichtlippen beim Einschieben des Spitzendes zuverlässig in der beabsichtigten Art und Richtung verformt werden.

Zur Lösung dieser Aufgabe dient ein Dichtungsring der gattungsgemäßen Art, der erfindungsgemäß dadurch gekennzeichnet ist, daß am Lippenring zwei weitere Lippen angeformt sind, nämlich eine innere Außendrucklippe, die sich im vormontierten Zustand des Dichtungsringes im wesentlichen nach axial auswärts erstreckt und bei eingeschobenem Spitzende an dessen Außenwand axial auswärts gerichtet zur Anlage kommt, und eine äußere Außendrucklippe, die im vormontierten Zustand des Dichtungsringes im wesentlichen radial auswärts gerichtet ist und bei eingeschobenem Spitzende an der Innenwand der Muffe mit einer axial auswärts weisenden Richtungskomponente zur Anlage kommt.

Die Erfindung schafft also einen Dichtungsring, der aus einem Lippenring und einem beweglich angeformten Haltering besteht. Der Lippenring trägt vier Dichtlippen, die zumindest im wesentlichen kreuzförmig oder X-förmig gegeneinanderstehen. Das Schnurprofil des Lippenringes weist also einen zumindest im wesentlichen X-förmigen Querschnitt auf. Von diesen vier Dichtlippen des Lippenringes liegt die innere Innendrucklippe radial innen und weist nach axial einwärts und dient der Dichtung am Außenmantel des Spitzendes gegen Innendruck. Die äußere Innendrucklippe liegt radial außen und axial einwärts gerichtet und dient der Dichtung am Innenmantel der Muffe gegen Innendruck. Die innere Außendrucklippe liegt radial innen und weist axial nach außen, also zum Muffenkragen, und dient der Dichtung am Außenmantel des Spitzendes gegen Außendruck. Die äußere Außendrucklippe schließlich liegt radial außen und weist im wesentlichen nach axial auswärts und dient der Dichtung gegen Außendruck an der Innenwand der Muffe. Bei eingeschobenem Spitzende dichtet der so ausgebildete Dichtungsring also als reiner Lippenring sowohl gegen Innendruck als auch gegen Außendruck.

An dem in der Muffe unverspannt über den Haltering vormontierten Lippenring stehen vor dem Einschieben des Spitzendes bestimmungsgemäß die innere Innendrucklippe und die äußere Außendrucklippe zumindest im wesentlichen radial, während die innere Außendrucklippe und die äußere Innendrucklippe zumindest im wesentlichen axial stehen. Dabei liegt der Lippenring mit dem Außenrand der äußeren Außendrucklippe lose an der Innenwand der Muffe an. Der freie Innendurchmesser der inneren Innendrucklippe ist kleiner als der kleinste Außendurchmesser eines einzuschiebenden Spitzendes. Der Lippenring wird dadurch beim Einschieben des Spitzendes in der Weise durch eine ungefähr durch den Schnittpunkt der vier Lippenachsen verlaufende radiale Ebene verkippt, daß bei eingestecktem Spitzende die beiden radial inneren Dichtlippen und die beiden radial äußeren Dichtlippen jeweils zumindest im wesentlichen symmetrisch zu dieser radialen Ebene am Außenmantel des Spitzendes bzw. an der Innenwand der Muffe anliegen.

Der Haltering ist entweder unmittelbar, jedoch beweglich, oder über einen ebenfalls aus dem gummielastischen Werkstoff bestehenden ringförmigen Zwischensteg an dem Lippenring, vorzugsweise an der äußeren Außendrucklippe, angeformt. Der Anlenkpunkt des Halteringes liegt dabei vorzugsweise an der radial äußeren Hälfte der äußeren Außendrucklippe, jedoch nicht unmittelbar am Lippenende, sondern in einigem Abstand von diesem äußeren Lippenende. Der ringförmige Zwischensteg erstreckt sich zumindest ungefähr in Richtung der inneren Außendrucklippe, also ungefähr axial. Beim Einschieben des Spitzendes in die mit einem solchen Dichtungsring bestückte Muffe wird der Dichtungsring durch eine ungefähr durch den Schnittpunkt der vier Lippenachsen verlaufende radiale Hauptebene verkippt, verrollt oder verschwenkt, da einerseits der freie Innendurchmesser der inneren Außendrucklippe größer als der in einem Fertigungstoleranzbereich größte Außendurchmesser des einzuschiebenden Spitzendes und gleichzeitig der freie Innendurchmesser der inneren Innendrucklippe kleiner als der kleinste Außendurchmesser des Spitzendes innerhalb eines Fertigungstoleranzbereiches für die Durchmesser des Spitzendes ist. Bei dieser Schwenkbewegung wird der Lippen direkt oder über den Zwischenring vom Haltering gehalten. Der Haltering kann dabei in prinzipiell beliebiger und an sich bekannter Weise in der Muffe fixiert sein, beispielsweise durch Verklemmen, Verspannen oder Verkleben. Vorzugsweise ist der Haltering in einer Ringnut gehaltert, die in der Innenwand der Muffe ausgebildet ist.

Der Lippenring wird vorzugsweise an seiner äußeren Außendrucklippe festgehalten, auf die dadurch ein Zug wirkt, der ihr bestimmungsgemäßes Umklappen nach axial und radial auswärts gewährleistet. Durch diese art der Anbindung des Halteringes an den vier Lippenringen wird dessen funktionsnotwendige Verschwenkbarkeit und Verkippbarkeit in keiner Weise behindert. Im Gegenteil, auch bei rauhem Betrieb ist durch die Anordnung und Ausbildung und durch die bewegliche Anlenkung des Halteringes in jedem Fall gewährleistet, daß die äußere Außendrucklippe entgegen der Einschubrichtung des Spitzendes zuverlässig und bestimmungsgemäß zum Muffenausgang, also mit einer nach axial auswärts weisenden Richtungskomponente, und nicht entgegen ihrem beabsichtigten Umschlagverhalten zum Muffengrund hin, umkippt. Dieses angestrebte Verformungsverhalten der äußeren Außendrucklippe wird im allgemeinen um so besser erzielt, je weiter radial außen der Zwischensteg bzw. der Haltering an der äußeren Außendrucklippe angreift. Dieser Angriffspunkt liegt daher vorzugsweise im Bereich der radial äußeren Hälfte der äußeren Außendrucklippe, vorzugsweise etwa 1/3 vom Außenrand nach radial einwärts entfernt.

Durchaus sehr gute Ergebnisse werden anderseits bei entsprechender Formgebung für die äußere Außendrucklippe jedoch auch dann erzielt, wenn der Haltering bzw. der Zwischensteg unmittelbar an der Wurzel der äußeren Außendrucklippe angreift.

Dadurch, daß die äußere Innendrucklippe und die äußere Außendrucklippe nicht in einer eigenen Ringnut in der Innenwand der Muffe liegen, sondern unmittelbar auf der zylindrischen Innenwand der Muffe dichtend anliegen können und dabei keine Haltefunktionen auszuüben brauchen, wird die Zuverlässigkeit der Dichtung wesentlich erhöht.

Der Haltering ist insbesondere axial auswärts vor dem Lippenring angeordnet und liegt vorzugsweise in einer in der Innenwand der Muffe ausgebildeten Ringnut. Der Haltering kann in diese Ringnut durch einen Spannring eingedrückt, eingespannt oder in andere Weise, insbesondere auch durch Verkleben, dort festgelegt sein. Vorzugsweise ist das Profil der Außenseite des Halteringes dem Profil der in der Innenwand der Muffe ausgebildeten Ringnut komplementär angepaßt. Dadurch wird ein besonders bündiger und fester Sitz des Halteringes in dieser Ringnut erzielt.

Die Erfindung ist im folgenden an Hand eines Ausführungsbeispiels in Verbindung mit der Zeichnung näher erläutert. Es zeigt die einzige

Figur, nämlich die

Fig. 1 im Axialschnitt und in schematischer Darstellung das Profil eines Ausführungsbeispiels des Dichtungsringes.

Das in der Fig. 1 dargestellte Ausführungsbeispiel zeigt einen Dichtungsring, der im wesentlichen aus einem Lippenring 1, einem Haltering 11 und einem ringförmigen Zwischensteg 10 besteht, der den Haltering 11 an den Lippenring 1 anbindet.

Der Lippenring 1 weist vier ringförmige Dichtlippen 3, 4, 5, 6 auf, die so zueinander stehen, daß das Schnurprofil des Lippenringes 1 im Axialschnitt im wesentlichen eine X-förmige Gestalt hat.

In der Fig. 1 ist der Lippenring 1 in seiner "stehenden" Stellung gezeigt, in der er sich im vormontierten umverformten und entspannten Zustand in der Muffe vor dem Einschieben des Spitzendes befindet. In der Darstellung der Fig. 1, in der die Muffe und das Spitzende nicht gezeigt sind, liegt bei vormontiertem Dichtungsring die zylindrische Innenwand der Muffe unten, der Muffengrund, auch Muffenspiegel genannt, links und der Muffenkragen, also die Öffnung der Muffe, rechts. Das Spitzende wird also in der in Fig. 1 gezeigten Stellung des Dichtungsringes von rechts nach links eingeschoben. Die innere Innendrucklippe 3, die auc der Außenseite des Spitzendes gegen Innendruck dichtet, steht ebenzo wie die äußere Außendrucklippe 6, die bei eingeschobenem Spitzende an der Innenwand der Muffe gegen Außendruck dichtet, im wesentlichen radial, und zwar in der Weise, daß der Außenrand der äußeren Außendrucklippe 6 lose oder unter nur geringer Vorspannung an der Innenwand der Muffe anliegt. Dabei ragt der Innenrand der inneren Innendrucklippe 3 radial in die Muffe hinein. Die innere Außendrucklippe 4, die bei eingeschobenem Spitzende an der Außenwand des Spitzendes gegen Außendruck dichtet, und die dieser gegenüberliegende äußere Innendrucklippe 5, die an der Innenwand der Muffe gegen Innendruck dichtet, sind vor dem Einschieben des Spitzendes in der in Fig. 1 gezeigten Weise im wesentlichen axial ausgerichtet, liegen also zu mindest im wesentlichen konzentrisch zum Mantel der Muffe. Dabei steht die innere Außendrucklippe 4 der Einschubrichtung des Spitzendes entgegen, weist also zum Muffenkragen bzw. zur Öffnung der Muffe, während die äußere Innendrucklippe 5 zum Muffengrund weist.

Beim Einschieben des Spitzendes in die mit dem Dichtungsring ausgerüstete Muffe wird die Stirnseite des Spitzendes frei über die radial innenliegende im wesentlichen zylindrische Fläche 7 der inneren Außendrucklippe 4 hinweggeführt und stößt dann auf die zum Muffenkragen weisende Ringfläche 8 der inneren Innendrucklippe 3. Beim weiteren Einschieben des Spitzendes wird dann der Lippenring 1 durch seine radiale Hauptebene entgegen dem Uhrzeigersinn verkippt oder abgerollt, und zwar so lange, bis die Lippen 3 und 4 in wesentlichen symmetrisch zu dieser radialen Hauptebene des Ringes an der Außenwand des Spitzendes anliegen und die Lippen 5 und 6 im wesentlichen symmetrisch zu dieser Ebene an der Innenwand der Muffe dichtend anliegen. Dabei weisen die Lippen 3 und 5 zum Muffengrund, während die Lippen 5 und 6 zum Muffenkragen, d.h. zur Muffenöffnung, weisen.

Um diese auch als Verkippen oider Verschwenken zu bezeichnende Abrollbewegung zu gewährleisten und zu verhindern, daß der Ring vom eingeschobenen Spitzende axial vor sich her zum Muffengrund geschoben wird, ist an der äußendrucklippe 6 ein ringförmiger Zwischensteg 10 angeformt, der sich im wesentlichen in Richtung der inneren Außendrucklippe 4 und koaxial zu dieser erstreckt. Die Anbindung des Zwischensteges 10 an die äußere Außendrucklippe 6 erfolgt dabei, bezogen auf die Höhe der ausgeformten Lippe, insbesondere in deren äußere Hälfte, und zwar vorzugsweise in der in Fig. 1 gezeigten Weise auf einem Drittel der Lippenhöhe von deren Außenrand entfernt. Bei dieser Anbindung des Zwischensteges 10 an die äußere Außendrucklippe 6 wird deren Dichtfunktion nicht beeinflußt, da nach dem Verschwenken oder Verrollen des Dichtungsringes und nach seiner Verformung zwischen dem eingesschobenen Spitzende und der Muffeninnenwand der Zwischensteg 10 durch die Bewegung der äußeren Außendrucklippe nach axial auswärts, also zur Muffenöffnung hin, praktisch vollkommen spannungsfrei ist.

An seinem freien, also axial außenliegenden Rand trägt der Zwischenringsteg 10 einen Haltering 11. Auf seiner Außenseite 13 weist der Haltering 11 ein Profil auf, das dem Profil einer in der Innenwand der Muffe ausgebildeten Ringnut, der in der Figur nicht dargestellten sogenannten Halteringnut, entspricht. Das Außenprofil des Halteringes 11 des Dichtungsringes und der in der Innenwand der Muffe ausgebildeten Halteringnut sind also profilkomplementär ausgebildet. Dieses Profil kann dabei selbstverständlich auch wesentlich andere Formen als das in der Fig. 1 gezeigte Profil aufweisen, beispielsweise nach Art von Anschlagkanten in der an sich aus der eingangs genannten Druckschrifft DE 25 45 830 A1 Bekannten Weise ausgebildet sein.

Bei dem in Fig. 1 gezeigten Ausführungsbeispiel des Dichtungsringes ist der Haltering 11 mit einer nach radial innen offenen Ringnut 12 ausgestattet, in die beispielsweise ein nach radial auswärts spannender Spannring oder Klemmring einlegbar ist, der den so geformten Haltering in die Halteringnut in der Innenwand der Muffe zwingt.

In der in Fig. 1 gezeigten Weise ist der Zwischensteg 10 vorzugsweise so lang, daß der Haltering 11 mit der Ringnut 12 gerade frei vor dem axial auswärts weisenden vorderen Rand der inneren Außendrucklippe 4 liegt. Dadurch werden die Montage des Ringes und das Einlegen und Spannen des Spannringes erleichtert. Wenn es aus technischen oder anderen Gründen wünschenswert ist, kann der Zwischensteg 10 aber ohne weiteres auch nur so lang ausgebildet werden, daß der Haltering 11 vollständig von der inneren Außendrucklippe 4 überdeckt ist. Dies wird sich häufig dann empfehlen, wenn der Haltering 11 beispielsweise durch Einkleben oder Einklipsen in der Ringnut in der Innenwand der Muffe festgelegt werden soll.

Wie eingangs bereits erwäht, braucht der Zwischenring 10 auch nicht in der in Fig. 1 gezeigten Weise relativ weit radial auswärts an der äußeren Außendrucklippe 6 angeformt zu sein, sondern kann ohne weiteres auch an deren Wurzel, also im Übergangsbereich von der äußeren Außendrucklippe 6 zur inneren Außendrucklippe 4 angreifen. Auch bei einer solchen Anlenkung des Halteringes 11 oder des Zwischensteges 10 wird noch die erfindungsgemäß angestrebte Lenkfunktion erhalten, die verhindert, daß beim Einschieben des Spitzendes die zunächst im wesentlichen radial stehende äußere Außendrucklippe 6 in unbeabsichtigter und funktionswidriger Weise zum Muffengrund, in der Darstellung der Fig. 1 also nach links, anstatt in beabsichtigter Weise zum Muffenkragen, in der Darstellung der Fig. 1 also nach rechts, umschlägt.

Vorzugsweise sind der Haltering 11 und der Zwischensteg 10 in der in Fig. 1 gezeigten Weise so am Lippenring angeordnet, daß die Halteelemente 10, 11 beim Einschieben des Spitzendes den Lippenring ziehend am Muffenrand halten. Bei dem in Fig. 1 gezeigten Ausführungsbeispiel erfolgt der Einschub des Spitzendes also von rechts nach links.

## Patentansprüche

1. Dichtungsring für eine Rohrsteckverbindung zwischen einem äußeren Rohrelement ("Muffe") und einem inneren Rohelement ("Spitzende"), wobei der zur Vormontage in der Muffe bestimmte und aus einem elastischen Werkstoff bestehende Dichtungsring aus einem Lippenring (1) und einem unmittelbar, jedoch b eweglich, oder über einen ringförmigen Zwischensteg (10) an diesem angeformten Haltering (11) besteht, wobei der Haltering (11) in der Muffe fixiert ist, und wobei der Lippenring eine innere Innendrucklippe (3) und eine äußere Innendrucklippe (5) trägt, von denen die innere Innendrucklippe (3) im vormontierten Zustand des Dichtungsringes im wesentlichen nach radial einwärts steht und die andere Innendrucklippe (5) mit Abstand von der Innenwand der Muffe im wesentlichen axial einwärts steht, und wobei der Lippenring (1) derart am Haltering (11) angelenkt ist, daß beim Einschieben des gegen die innere Innendrucklippe (3) stoßenden Spitzendes eine Verformung des Lippenringes (1) in der Weise erfolgt, daß die innere Innendrucklippe (3) an der Außenwand des Spitzendes axial einwärts gerichtet und die äußere Innendrucklippe (5) an der Innenwand der Muffe axial einwärts gerichtet zur Anlage kommen, dadurch gekennzeichnet, daß am Lippenring (1) zwei weitere Lippen angeformt sind, nämlich eine innere Außendrucklippe (4), die sich im vormontierten Zustand des Dichtungsringes (1) im wesentlichen nach axial auswärts erstreckt und bei eingeschobenem Spitzende an dessen Außenwand axial auswärts gerichtet zur Anlage kommt, und eine äußere Außendrucklippe (6), die im vormontierten Zustand des Dichtungsringes im wesentlichen radial auswärts gerichtet ist und bei eingeschobenem Spitzende an der Innenwand der Muffe mit einer axial auswärts weisenden Richtungskomponente zur Anlage kommt.

2. Dichtungsring nach Anspruch 1, dadurch gekennzeichnet, daß der Haltering (11) mit dem Lippenring (1) an der radial äußeren Hälfte der äußeren Außendrucklippe (6), jedoch mit Abstand zu deren Lippenende, verbunden ist.

3. Dichtungsring nach einem der Ansprüche 1 oder 2, dadurch gekennzeichnet, daß das Profil der Außenseite (13) des halteringes (11) dem Profil einer in der Innenwand der Muffe ausgebildeten Ringnut entspricht.

## Revendications

1. Bague d'étanchéité annulaire pour l'assemblage par emboîtement d'un élément extérieur d'un tuyau (manchon) et d'un élément intérieur (extrémité mâle), pour que ce joint d'étanchéité pré-monté à l'intérieur du manchon soit réalisé dans un matériau élastique et se compose d'une lèvre circulaire (1) qui est reliée soit directement, tout en restant mobile, soit indirectement, par l'intermédiaire d'une ailette annulaire (10) à une bague de fixation (11) maintenue dans le manchon, de manière que la lèvre circulaire comporte une lèvre intérieure (3), opposée à la pression intérieure et une lèvre extérieure (5) également opposée à la pression intérieure afin que la lèvre intérieure (3) opposée à la pression intérieure soit dirigée, en position pré-montée du joint d'etanchéité annulaire, dans le sens approximativement radial et vers l'intérieure, tandis que le deuxième lèvre, c'est-à-dire la lèvre extérieure (5) opposée à la pression intérieure est placée à certaine distance de la paroi intérieure du manchon et se dirige vers l'intérieur, mais dans le sens approximativement axial, alors que la lèvre circulaire (1) est maintenue sur la bague de fixation (11) de manière que l'introduction de l'élément mâle, qui vient s'appliquer contre la lèvre intérieure (3) opposée à la pression intérieure, provoque une déformation de la lèvre circulaire (1), de manière telle que cette lèvre intérieure, opposée à la pression intérieure s'appuie contre la paroi extérieure de l'élément mâle et plus précisément dans le sens axial et vers l'intérieur, alors que la lèvre extérieure (5) opposée à la pression intérieure s'appuie contre la paroi intérieure du manchon et plus précisément dans le même sens axial et vers l'intérieur, cette bague d'étanchéité étant caractérisée en ce que la lèvre circulaire porte deux lèvres supplémentaires: d'une part, une lèvre intérieure opposée du joint d'étanchéité annulaire (1) est dirigée dans le sens approximativement axial et vers l'intérieur et qui, après l'introduction de l'extrémité mâle, s'appuie contre la paroi extérieure de celle-ci pour être dirigée, dans le sens axial et vers l'extérieur et, d'autre part, une lèvre extérieure opposée à la pression extérieure (6) qui, dans la position pré-montée du joint d'étanchéité, occupe une position aproximativement radiale dirigée vers l'extérieur et qui, après l'introduction de l'extrémité mâle, s'appuie contre la paroi intérieure du manchon pour être dirigée finalement dans le sens axial et vers l'intérieur dans une position représentant une composante directionnelle.

2. Bague d'étanchéite annulaire selon la revendication 1, caractérisée en ce que la bague de fixation (11) est reliée à la lèvre circulaire (1) dans la moité extérieure, vue dans le sens radial, de la lèvre extérieure (6) opposée à la pression extérieure et à une certaine distance de l'extrémité de cette lèvre extérieure (6).

3. Bague d'étanchéite selon l'une des revendications 1 ou 2, caractérisés en ce que le profil de la face extérieure (13) de la bague de fixation (11) est adapté au profil de la rainure ménagée dans la paroi intérieure du manchon.

**Claims**

1. A sealing ring assembly for a plug–in type tube connection between an outer tube element ("socket") and an inner tube element ("spigot"), said sealing ring being adapted for pre-assemblying inside the socket and consisting of an elastic material and comprising a lip ring (1) and a retaining ring (11) either directly connected thereto or connected thereto by dint of an annular intermediate web (10), said retaining ring (11) being fixed inside the socket, and said lip ring having an inner internal pressure lip (2) and an outer internal pressure lip (5), of which the inner internal pressure lip (3) is standing in the pre-assembled state essentially radially inwards and the other internal pressure lip (5) is standing essentially axially inwards with a distance from the inner surface of the socket, and said lip ring (1) being connected with the retaining ring (11) in such a manner that upon insertion the spigot strikes against the inner internal lip (3) and causes such a deformation of the lip ring (1) that the inner internal pressure lip (3) then is directed axially inwards abutting the outer surface of the spigot and the outer internal pressure lip (5) then is directed axially inwards abutting the inner surface of the socket, characterized in that the lip ring (1) comprises two additional lips, namely an inner external pressure lip (4) extending essentially axially outwards in the pre-assembled spigot in an axially outwards directed manner, and an outer external pressure lip (6), which is directed essentially radially outwards in the pre-assembled state of the sealing ring and is abutting the inner surface of the socket with an axially outwards directional component, if the spigot is inserted.

2. Sealing ring assembly according to claim 1, characterized in that the retaining ring (11) is connected with the lip ring (1) at the radial outer section of the outer external pressure lip (6) in spaced relationship to the end portion of the outer external pressure lip (6).

3. Sealing ring assembly according to claim 1 or 2, characterized in that the contour of the outer surface (13) of the retaining ring (11) corresponds to the contour of an annular groove which is formed in the inner surface of the socket.

# FIG.1